# EUROPEAN PATENT APPLICATION

(11) **EP 1 505 488 A1**
(43) Date of publication of application: **09.02.2005**
(21) Application number: 03725754.0
(22) Date of filing: 02.05.2003
(51) Int. Cl.: G06F 3/14, G06T 13/00

(54) **CONTENT DISPLAY DEVICE AND METHOD FOR CONTROLLING DISPLAY ACCORDING TO COMPLEXITY OF CONTENT AND CONTENT DISPLAY PROGRAM**

(30) Priority: 15.05.2002 JP 2002140415
(71) Applicant: SHARP KABUSHIKI KAISHA, Osaka 545-8522 (JP)
(72) Inventor: NAKANISHI, Masahiro, Tenri-shi, Nara 632-0004 (JP)
(74) Representative: Brown, Kenneth Richard
(86) International application number: PCT/JP2003/005640
(87) International publication number: WO 2003/098424

(57) **Abstract**

The content display apparatus related to mobile terminals, mobile phones, computer apparatuses and others performs the following process to accurately display the content. The content to be reproduced is stored in a storage unit. Data of the content to be reproduced is evaluated, and complexity of the content is calculated. When the obtained complexity is smaller than the upper limit of processing capability of the terminal (the upper limit of complexity), the content can be reproduced as it is. If the obtained complexity exceeds the upper limit of the processing capability of the terminal, part of the functions of the terminal are invalidated to suppress display of part of the content, and complexity is calculated again. The process is repeated such that the content is reproduced within the processing capability of the terminal.

## Description

### Technical Field

The present invention relates to content display apparatuses, content display programs, recording media recorded with the programs, and content display methods. More particularly, the present invention relates to a content display apparatus, a content display program, a recording medium recorded with the program, and a content display method that permit accurate display of the content.

### Background Art

Conventionally, mobile phones, PDA (Personal Digital Assistance) devices, computer apparatuses and others have been used to receive or input content data and display the same on displays.

In particular, in the terminal such as a mobile phone, the device resources need to be used for communication, and thus, it is desirable to reduce the load on the device for display of the content.

There is known a technique where a limit value is set for reproduction processing capability for each of the terminals having different processing capabilities, processing capability (complexity) required for reproduction of a content is calculated before reproduction thereof, and reproduction of the content is suppressed when the complexity exceeds the limit value of the reproduction processing capability, to thereby prevent unnecessary load from being imposed on the terminal.

With the conventional technique, however, the following problems arise.
(1) In the case of the content such as advertisement, the content distributor wants the content to be viewed even if the image quality thereof is degraded to some extent. If the reproduction is blocked for each terminal according to the limit value of its reproduction processing capability, the total number of the users who see the content will decrease.
(2) Terminals are gradually advanced in performance over time. When a new terminal is provided with a new function, the processing load will increase as the new function is performed. This may cause a case where the new terminal cannot reproduce the content that an old terminal unprovided with the new function could have reproduced.
(3) Since the complexity is calculated before reproduction, there may be a case where the entire content cannot be reproduced when only a particular portion of the content exceeds the limit of reproduction.

The present invention has been made in view of the above-described problems. An object of the present invention is to provide a content display apparatus, a content display program, a recording medium recorded with the program, and a content display method that permit accurate display of the content.

### Disclosure of the Invention

To achieve the above-described object, according to an aspect of the present invention, the content display apparatus displays a content including a plurality of objects. Priorities in display are assigned to the plurality of objects, respectively. The apparatus includes complexity calculating means for calculating complexity when displaying the content based on the plurality of objects, and control means for suppressing display of part of the objects included in the content based on the calculated complexity and the priorities.

According to another aspect of the present invention, the content display apparatus displays a content, with priorities being assigned to respective functions for displaying the content. The apparatus includes complexity calculating means for calculating complexity when displaying the content, and control means for invalidating part of the functions for displaying the content based on the calculated complexity and the priorities.

Preferably, the content includes animation formed of a plurality of frames, the complexity calculating means calculates complexity in display for each of the plurality of frames, and the control means performs control of display of each of the plurality of frames.

According to yet another aspect of the present invention, the content display apparatus displays animation formed of a plurality of frames as a content. The apparatus includes complexity calculating means for calculating, for each of the plurality of frames, complexity when displaying the relevant frame, and control means for suppressing display of the frame for which the calculated complexity is at least a predetermined value.

According to yet another aspect of the present invention, the content display program is for displaying a content including a plurality of objects. Priorities in display are assigned to the plurality of objects, respectively. The program causes a computer to perform the complexity calculating step of calculating complexity when displaying the content based on the plurality of objects, and the control step of suppressing display of part of the objects included in the content based on the calculated complexity and the priorities.

According to yet another aspect of the present invention, the content display program is for displaying a content, with priorities being assigned to respective functions for displaying the content. The program causes a computer to perform the complexity calculating step of calculating complexity when displaying the content, and the control step of invalidating part of the functions for displaying the content based on the calculated complexity and the priorities.

Preferably, the content includes animation formed of a plurality of frames, the complexity calculating step includes the step of calculating complexity in display for each of the plurality of frames, and the control step includes the step of performing control of display of each of the plurality of frames.

According to yet another aspect of the present invention, the content display program is for displaying animation formed of a plurality of frames as a content. The program causes a computer to perform the complexity calculating step of calculating, for each of the plurality of frames, complexity when displaying the relevant frame, and the control step of suppressing display of the frame for which the calculated complexity is at least a predetermined value.

According to yet another aspect of the present invention, the content display method is for displaying a content including a plurality of objects. Priorities in display are assigned to the plurality of objects, respectively. The method includes the complexity calculating step of calculating complexity when displaying the content based on the plurality of objects, and the control step of suppressing display of part of the objects included in the content based on the calculated complexity and the priorities.

According to yet anther aspect of the present invention, the content display method is for displaying a content, with priorities being assigned to respective functions for displaying the content. The method includes the complexity calculating step of calculating complexity when displaying the content, and the control step of invalidating part of the functions for displaying the content based on the calculated complexity and the priorities.

Preferably, the content includes animation formed of a plurality of frames, the complexity calculating step includes the step of calculating complexity in display for each of the plurality of frames, and the control step includes the step of performing control of display of each of the plurality of frames.

According to yet another aspect of the present invention, the content display method is for displaying animation formed of a plurality of frames as a content. The method includes the complexity calculating step of calculating, for each of the plurality of frames, complexity when displaying the relevant frame, and the control step of suppressing display of the frame for which the calculated complexity is at least a predetermined value.

According to yet another aspect of the present invention, the computer readable recording medium is recorded with any of the content display programs described above.

### Brief Description of the Drawings

Fig. 1 is a functional block diagram of a mobile phone 1 according to a first embodiment of the present invention.
Fig. 2 is a flowchart illustrating a process performed by mobile phone 1.
Fig. 3 shows a specific example of the content of advertisement.
Fig. 4 shows priorities of the objects and complexities for plotting the objects.
Fig. 5 shows the limit of complexity and the expression for calculating the complexity for each terminal.
Fig. 6 shows the display results after the objects other than the characters are omitted.
Fig. 7 shows a content having a plurality of objects in an image screen.
Fig. 8 shows a content having a plurality of pages in a file, with the pages switched successively for reproduction.
Fig. 9 is a flowchart illustrating a method for calculating the complexity performed in a mobile phone according to the embodiment of the present invention.
Fig. 10 is a flowchart in the case of processing the content having a plurality of pages.
Fig. 11 shows a content formed of a graphic symbol and gradation coloring the interior thereof.
Fig. 12 shows kinds of objects, plotting functions and their complexities set in a terminal C.
Fig. 13 shows the upper limit of complexity and the expression for calculating the complexity in terminal C.
Fig. 14 shows a content in the form of animation having frames to be plotted continuously.

### Best Modes for Carrying Out the Invention

Hereinafter, embodiments of the present invention will be described with reference to the drawings. In the following explanation, the same reference characters denote the same portions or components, which are identical in name and function as well. Thus, detailed description thereof will not be repeated.

In an embodiment of the present invention, in the case of reproducing a content that is difficult to reproduce and imposes too much load, some of the functions of the reproduction engine are set off to allow reproduction of such a complex content. Specifically, a terminal device such as a mobile phone performs the following process.
(1) Each terminal is provided with an expression for calculating complexity when a particular function is set off in an animation reproduction unit, and an upper limit of complexity acceptable for reproduction. Further, priority in plotting is assigned to each object to be reproduced. They are used to make the content reproduced with its intention maintained as much as possible.
(2) Each terminal is provided with (A) complexity when all functions are set on and an expression for calculating the same, and (B) complexity when a particular function is set off and the expression for calculating the same. When reproduction is impossible with (A), recalculation is made with (B) to try the reproduction. This prevents the situation where a content is reproducible not with a latest model but with an old model.
(3) In the case where complexity temporarily exceeds the upper limit during reproduction, the method of (1) or (2) above is employed to temporarily lower the quality of reproduction to continue the reproduction. When it is found before commencement of reproduction that the complexity will exceed the upper limit, the method of (1) or (2) above is employed to suppress commencement of reproduction, or to lower the quality of reproduction prior to the commencement of reproduction.

### [First Embodiment]

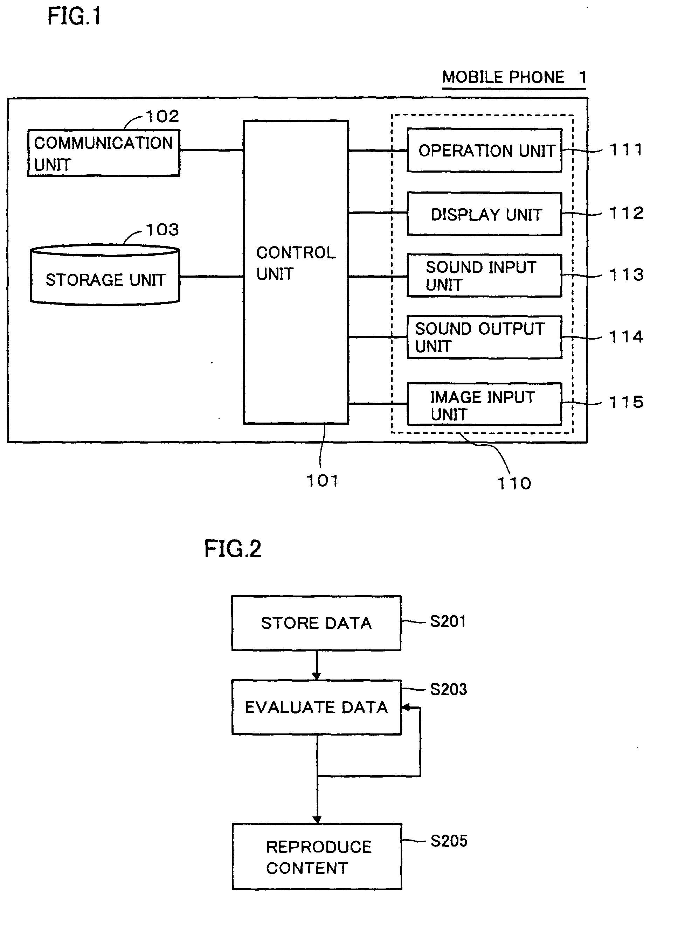

Fig. 1 is a functional block diagram of a mobile phone 1 according to a first embodiment of the present invention.

As shown in Fig. 1, mobile phone 1 includes a control unit 101 formed of a CPU (Central Processing Unit) or the like and controlling the whole, a communication unit 102 performing communication via a relay station, a storage unit 103 storing a program performed in control unit 101, intermediate data of the program, data obtained from another apparatus and others, and an input/output unit 110 for input/output of various kinds of information and commands.

Input/output unit 110 includes an operation unit 111 having ten keys and others used by a user of mobile phone 1 to input a telephone number of another telephone machine, input an item for retrieving a received e-mail, and input a display request of the received e-mail, for example, a display unit 112 formed of a display screen for display of information for the user, a sound input unit 113 formed of a microphone for input of sound, a sound output unit 114 formed of a speaker for output of sound, and an image input unit 115 formed of a camera for taking a picture image.

It is noted that the hardware of mobile phone 1 shown in Fig. 1 is common and non-restrictive.

Fig. 2 is a flowchart illustrating a content display process performed by mobile phone 1.

Referring to Fig. 2, in step S201, storage unit 103 stores a content to be reproduced. In step S203, control unit 101 performs data evaluation of the content to be reproduced. Specifically, complexity of the content is calculated. If the complexity obtained is less than the upper limit of complexity processible by the terminal, the content is reproduced in step S205.

If it exceeds the upper limit of processing capability of the terminal, some functions of the terminal are invalidated to make part of the content not displayed, and complexity is calculated again (step S203). The process is repeated to calculate the complexity with which the content can be reproduced without exceeding the processing capability. When the relevant complexity is obtained, reproduction is performed. Otherwise, reproduction is not effected.

Terminals capable of reproducing multimedia contents may roughly be divided into two groups, i.e., high-grade terminals provided with a sophisticated plotting function requiring heavy load of processing, and low-grade terminals unprovided with such a function. With the conventional techniques, there has been a case where a content supported by the relevant function cannot be reproduced with a high-grade terminal due to its insufficient processing capability, while the same content can be reproduced with a low-grade terminal since it is unprovided with the sophisticated plotting function requiring heavy load of processing.

In the present embodiment, each terminal uses an expression to calculate complexity indicting the difficulty in reproducing a content for the terminal, based on the number of polygons, the number of vertexes and others of the content.

Further, an upper limit of complexity for reproduction is set for each terminal when the plotting functions of a plurality of objects are validated or invalidated. In the terminal, it is determined whether complexity exceeds the upper limit when the plotting functions of all objects are validated. If so, complexity is recalculated using the expression for calculating complexity, with part of the plotting functions being invalidated. The process is repeated to ensure that any content reproducible with a low-grade terminal can be reproduced with any higher-grade terminals.

As such, in the present embodiment, the plotting is cancelled in units of objects as necessary, to reduce the load on the terminal.

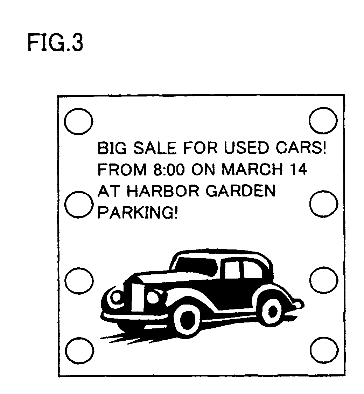

Fig. 3 shows a specific example of the content of advertisement.

The content shown in Fig. 3 includes a character object (character string of "BIG SALE FOR USED CARS! ... PARKING!"), an image object of car, and a graphic symbol object of circular shape (eight white circles) surrounding and decorating the content.

In such a content, priority is assigned to each object as data by the producer of the content. Here, it is assumed that priorities are set in order of the character object, the image object of the car, and the graphic symbol object.

That is, the character object directly indicating the subject of the advertisement needs to be displayed without fail, while it will not pose a problem if the graphic symbol object is not displayed.

Moreover, complexities are set for display of the characters, images and graphic symbols in accordance with the models of the mobile phones.

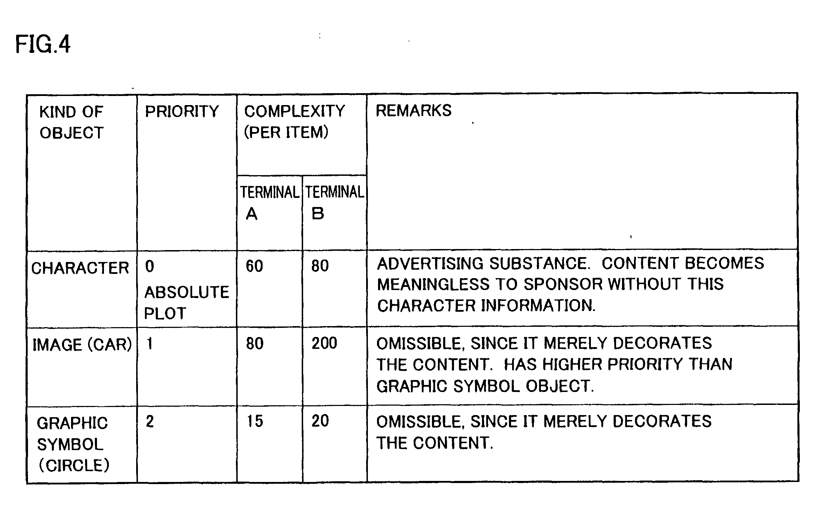

Fig. 4 shows priorities of objects and complexities for plotting the objects. Specifically, Fig. 4 shows the priorities of the above-described objects, and values indicating the complexities for plotting the respective objects in terminals (mobile phones) of models A and B.

As the intention of the advertising provider or the content distributor, a highest order of priority is assigned to the character information, since there is no point in reproducing the content with the character information missing. Thus, an absolute plot ("0") is assigned to the character object. The objects of the car and the circle may be omitted, although the object of the car is higher in priority than the graphic symbol object of the circle merely decorating the content. As such, the priority "1" is assigned to the car, and "2" to the circular object. The object assigned with the absolute plot "0" is plotted without fail. If the complexity of the object of the absolute plot "0" alone exceeds the reproduction limit, then the content is not reproduced. To enable these operations, control unit 101 can invalidate the plotting functions in units of objects.

Further, complexities of the objects vary in different models of terminals as shown in Fig. 4, since the terminals of different models have different plotting capabilities for characters, images and graphic symbols. Specifically, complexities of the character, image and graphic symbol are "60", "80" and "15" in the terminal A, while they are "80", "200" and "20" in the terminal B.

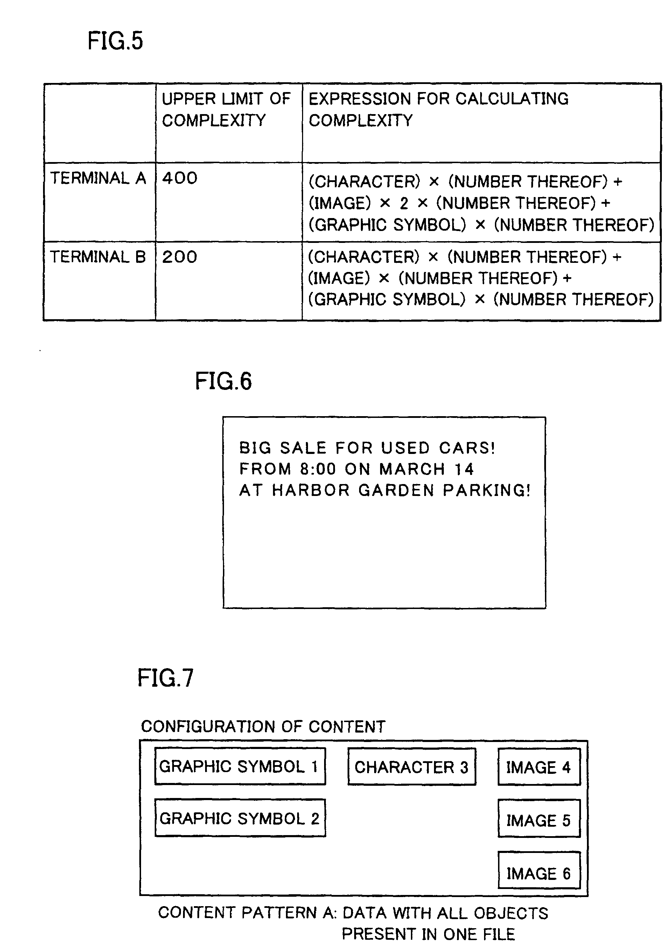

Fig. 5 shows the upper limit of complexity and the expression for calculating the complexity for each terminal.

Referring to the figure, terminal A has the upper limit of complexity of "400", and the expression for calculating the same is set as (character) × (the number thereof) + (image) × 2 × (the number thereof) + (graphic symbol) × (the number thereof).

In terminal B, the upper limit of complexity is "200", and the expression for calculating the same is set as (character) × (the number thereof) + (image) × (the number thereof) + (graphic symbol) × (the number thereof).

In terminal A, upon reproduction of the content, control unit 101 of Fig. 1 calculates the complexity of the content based on the expression. The calculated result becomes 60 × 1 + 80 × 2 × 1 + 15 × 8 = 340, which is lower than the upper limit of complexity of "400". Thus, the content is reproduced without alternation (that is, the display obtained is exactly as shown in Fig. 3).

In terminal B, the control unit calculates the complexity of the content in the same manner. The calculated result based on the expression becomes 80 × 1 + 200 × 1 + 20 × 8 = 440, which far exceeds the limit of "200". In this case, the content cannot be reproduced as it is, and thus, the control unit recalculates the complexity omitting one graphic symbol object having the lowest order of priority.

Omitting one graphic symbol object can lower the complexity by "20" (see Fig. 4). When the eight graphic symbol objects are all omitted, the complexity is still "280". In this case, the object of the image (car) having the second lowest order of priority is omitted. As a result, the complexity becomes "80", allowing reproduction.

Fig. 6 shows the display result with the objects other than the characters all omitted.

It is noted that, in this case, six graphic symbol objects having the lower order of priority may be plotted, since the complexity differs by "120" from the upper limit of "200".

The values in the expression and the values of complexity for the respective kinds of objects of character, image and others are determined in accordance with the reproduction property of the terminal. That is, the individual values and the expression for calculation are determined based on the plotting speed for each item of the respective objects and from experience.

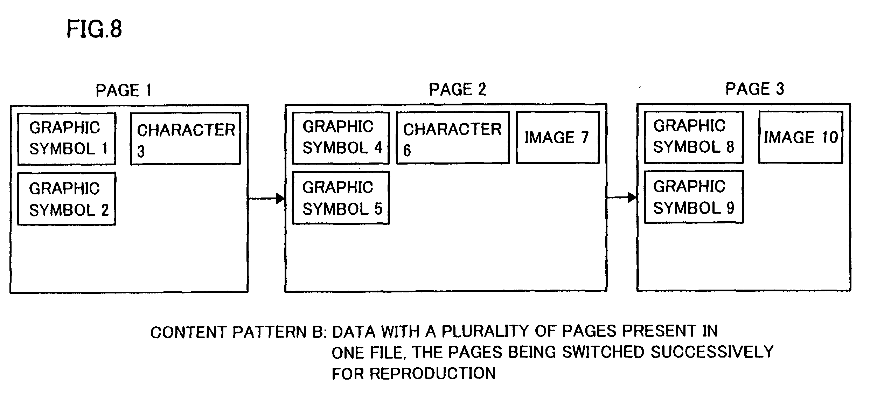

The configuration of the content may be as shown in Fig. 7 where a plurality of objects are present in one screen, or a content may be configured as shown in Fig. 8 where a plurality of pages are present in one file and the pages are switched successively for reproduction.

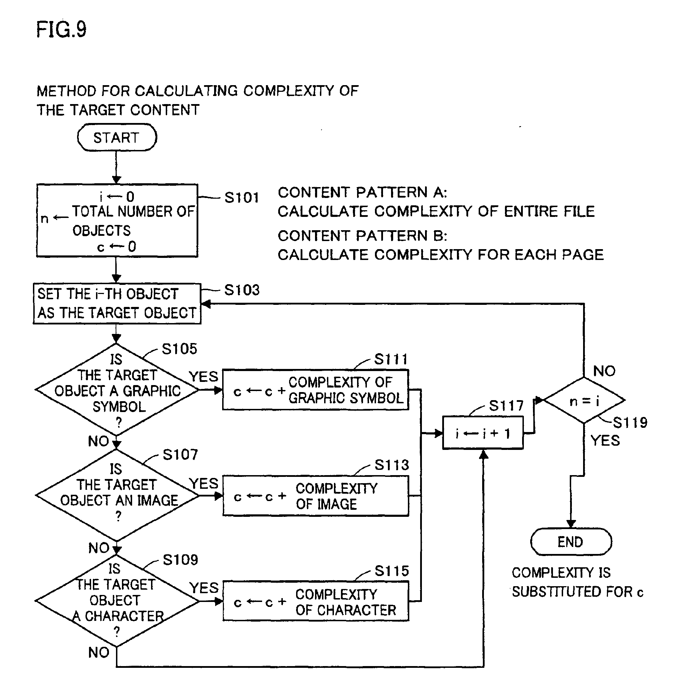

Fig. 9 is a flowchart illustrating a method for calculating complexity that is performed in the mobile phone according to the present embodiment.

Referring to Fig. 9, in step S101, 0 is substituted for the variable i indicating the number of objects to be processed, and the total number of the objects within the content is substituted for n. Further, 0 is substituted for the variable c indicating complexity of the content.

In step S103, the i-th object is set to be an object to be processed. When it is determined that the target object is a graphic symbol in step S105, complexity per graphic symbol is added to c in step S111. When it is determined that the target object is an image in step S107, complexity per image is added to c in step S113. When the target object is determined to be a character in step S109, complexity per character object is added to c in step S115.

Thereafter, in step S 117, the value of is incremented by 1, and it is determined in step S119 whether the relation of n = i is satisfied. If YES, the calculation is finished, with the then c being set to be the complexity of the content. If NO, the process returns to step S103.

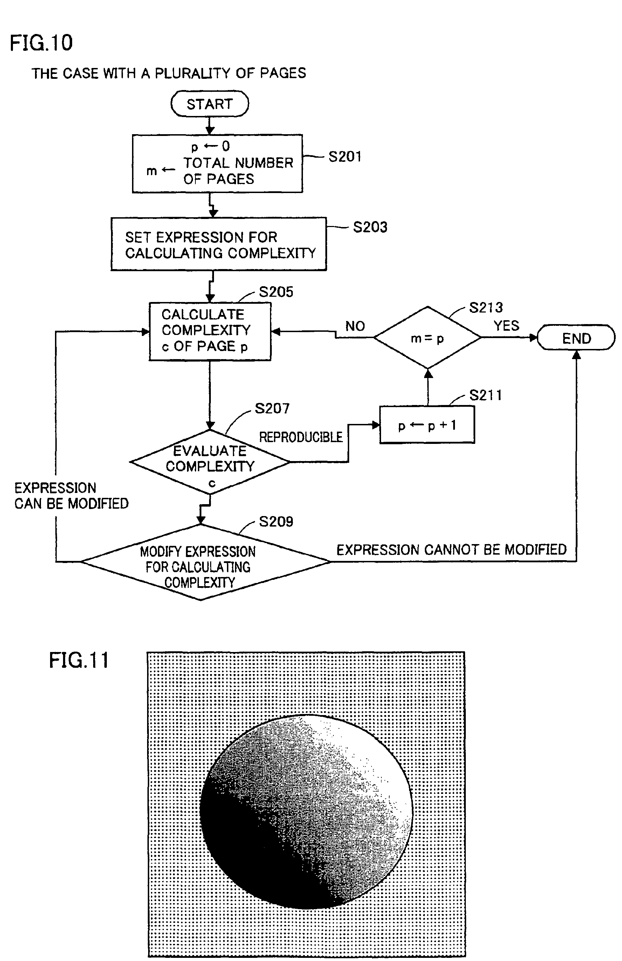

Fig. 10 is a flowchart in the case of processing a content having a plurality of pages. When there are two or more pages as shown in Fig. 8, complexity is calculated for each page. When there is a page that cannot be reproduced due to its complexity, an object to be displayed on the page is omitted.

Referring to Fig. 10, in step S201, 0 is substituted for the page number p to be processed and the total number of pages included in the content is substituted for the variable m.

An expression for calculating the complexity is set in step S203, and then, in step S205, complexity c of the page p is calculated in accordance with the flowchart shown in Fig. 9.

In step S207, it is determined whether the relevant page can be reproduced, by comparing the calculated complexity c with the upper limit. If it is determined that reproduction is possible, the value of variable p is incremented by 1 in step S211. In step S213, it is determined whether m = p. If NO, the process returns to step S205. If YES, the current routine is finished.

When it is determined that reproduction is impossible in step S207, in step S209, the expression for calculation is modified, by reducing the content to be displayed in accordance with priorities. With the complexity c decreased in this manner, the process returns to step S205.

If the expression cannot be modified in step S209, the current routine is terminated.

### [Second Embodiment]

The hardware configuration of the mobile phone according to the second embodiment is identical to that of the first embodiment, and thus, description thereof is not repeated here. In the second embodiment, a specific function of the terminal is invalidated based on the substance of the content.

It is assumed that a content is formed of a graphic symbol (circle) and gradation coloring the interior thereof, as shown in Fig. 11.

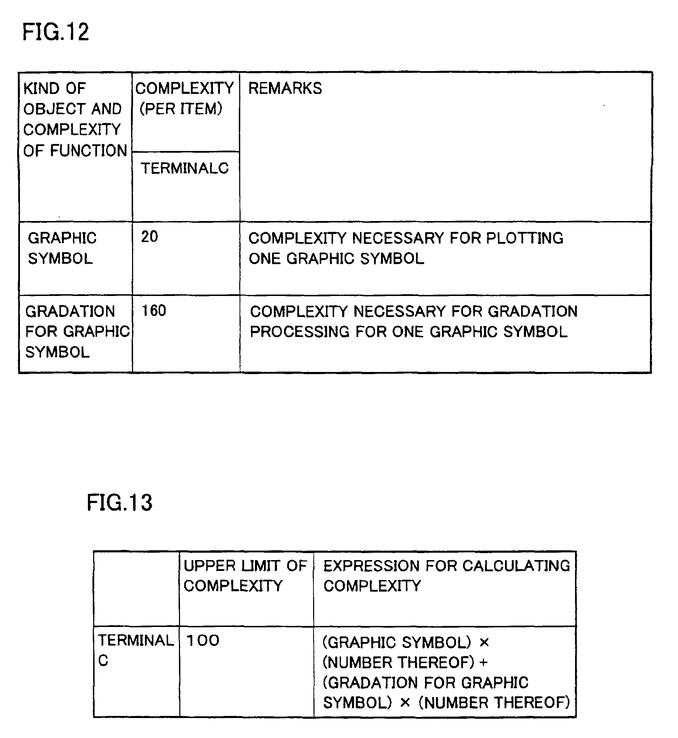

Fig. 12 shows object plotting functions and their complexities set in a terminal C. Here, complexity of "20" is set for the function of plotting a graphic symbol, and complexity of "160" is set for the function of gradation for the graphic symbol.

Fig. 13 shows the upper limit of complexity and the expression for calculating the complexity in terminal C.

The complexity representing the upper limit for reproduction of terminal C is "100". The calculated result of the complexity of the content is 20 × 1 + 160 × 1 = 180, indicating that the content cannot be reproduced. In this case, the control unit recalculates the complexity, with the gradation function invalidated, and the result of "20" is obtained. This means that the content can be reproduced if the animation reproduction unit does not use the gradation function.

With such a configuration, when there are two terminals D and E exactly the same in performance of hardware and software but gradation is supported only by terminal E that is an upper-grade model of terminal D, the situation where a certain content is reproducible with terminal D, not supporting gradation, but not reproducible with its upper-grade model terminal E can be avoided.

Further, even if the two terminals are not exactly the same in performance of hardware and software, or if terminal D is a succeeding model of and superior in performance to terminal E, the situation where the content reproducible with an old model cannot be reproduced with its succeeding model is prevented, and compatibility is guaranteed

### [Third Embodiment]

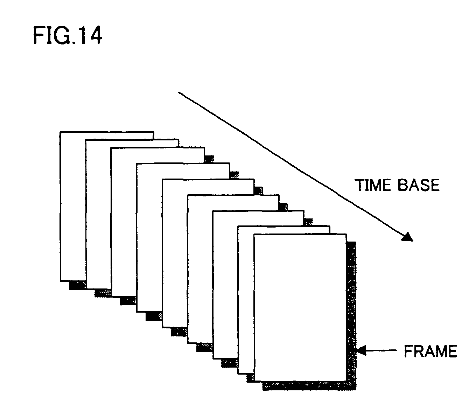

Processing for reproduction of a content in the form of animation having a plurality of frames continuously plotted over time, as shown in Fig. 14, is now described.

In such a case, according to the third embodiment, complexity is calculated each time a frame is plotted, and the content is reproduced as much as possible using the configuration in the first or second embodiment. For the frame exceeding the upper limit of complexity, a certain process such as skipping of the frame may be performed. As such, the content can be reproduced within the processing capability of the terminal.

If it is possible to estimate the complexities of the frames based on the data of the content before reproduction thereof, complexity may be calculated for every frame before commencement of reproduction, rather than calculating the same each time a frame is plotted. This can prevent a situation where a gradation function, for example, becomes unavailable during reproduction of animation and gradation is not obtained for a particular period of time during the reproduction. More specifically, when complexity is calculated for every frame prior to reproduction, a frame may be found which is reproducible only if the gradation function is set off for the frame. In such a case, the gradation function is set off for the entire content.

### [Others]

It is noted that modifications may be made to notify the user that the content is reproduced somewhat different from the original when part of the content is not displayed or reproduction is performed with a certain function invalidated.

Further, the above-described method for restricting plotting or processing of the content may be provided in the form of a program. Such a program may be provided as a program product recorded on a computer readable recording medium such as a flexible disk attached to a computer, a CD-ROM, a ROM, a RAM or a memory card. Alternatively, the program may be recorded on a recording medium such as a hard disk built in a computer, or downloaded via a network.

The program product thus provided may be installed in a program storage unit such as the hard disk for execution, or may be executed directly from a ROM.

Note that a program product includes the program itself and a recording medium recorded with the program.

The present invention is applicable to any of mobile phone, PDA device, personal computer and other computer apparatuses, as long as it is used to reproduce a content.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Industrial Applicability

As described above, the content display apparatus, the content display program, the recording medium recorded with the program, and the content display method according to the present invention are suitable for use in the techniques related to mobile terminals, mobile phones, computer apparatuses and others.

## Claims

1. A content display apparatus displaying a content including a plurality of objects, priorities in display being assigned to said plurality of objects, respectively, comprising:
complexity calculating means for calculating complexity when displaying said content based on said plurality of objects; and
control means for suppressing display of part of the objects included in said content based on said calculated complexity and said priorities.

2. The content display apparatus according to claim 1, wherein
said content includes animation formed of a plurality of frames,
said complexity calculating means calculates complexity in display for each of said plurality of frames, and
said control means performs control of display of each of said plurality of frames.

3. A content display apparatus displaying a content, priorities being assigned to respective functions for displaying said content, comprising:
complexity calculating means for calculating complexity when displaying said content; and
control means for invalidating part of the functions for displaying said content based on said calculated complexity and said priorities.

4. The content display apparatus according to claim 3, wherein
said content includes animation formed of a plurality of frames,
said complexity calculating means calculates complexity in display for each of said plurality of frames, and
said control means performs control of display of each of said plurality of frames.

5. A content display apparatus displaying animation formed of a plurality of frames as a content, comprising:
complexity calculating means for calculating, for each of said plurality of frames, complexity when displaying the relevant frame; and
control means for suppressing display of the frame for which said calculated complexity is at least a predetermined value.

6. A content display program for displaying a content including a plurality of objects, priorities in display being assigned to said plurality of objects, respectively, the program causing a computer to perform:
the complexity calculating step of calculating complexity when displaying said content based on said plurality of objects; and
the control step of suppressing display of part of the objects included in said content based on said calculated complexity and said priorities.

7. The content display program according to claim 6, wherein
said content includes animation formed of a plurality of frames,
said complexity calculating step includes the step of calculating complexity in display for each of said plurality of frames, and
said control step includes the step of performing control of display of each of said plurality of frames.

8. A content display program for displaying a content, priorities being assigned to respective functions for displaying said content, the program causing a computer to perform:
the complexity calculating step of calculating complexity when displaying said content; and
the control step of invalidating part of the functions for displaying said content based on said calculated complexity and said priorities.

9. The content display program according to claim 8, wherein
said content includes animation formed of a plurality of frames,
said complexity calculating step includes the step of calculating complexity in display for each of said plurality of frames, and
said control step includes the step of performing control of display of each of said plurality of frames.

10. A content display program for displaying animation formed of a plurality of frames as a content, causing a computer to perform:
the complexity calculating step of calculating, for each of said plurality of frames, complexity when displaying the relevant frame; and
the control step of suppressing display of the frame for which said calculated complexity is at least a predetermined value.

11. A content display method for displaying a content including a plurality of objects, priorities in display being assigned to said plurality of objects, respectively, comprising:
the complexity calculating step of calculating complexity when displaying said content based on said plurality of objects; and
the control step of suppressing display of part of the objects included in said content based on said calculated complexity and said priorities.

12. The content display method according to claim 11, wherein
said content includes animation formed of a plurality of frames,
said complexity calculating step includes the step of calculating complexity in display for each of said plurality of frames, and
said control step includes the step of performing control of display of each of said plurality of frames.

13. A content display method for displaying a content, priorities being assigned to respective functions for displaying said content, comprising:
the complexity calculating step of calculating complexity when displaying said content; and
the control step of invalidating part of the functions for displaying said content based on said calculated complexity and said priorities.

14. The content display method according to claim 13, wherein
said content includes animation formed of a plurality of frames,
said complexity calculating step includes the step of calculating complexity in display for each of said plurality of frames, and
said control step includes the step of performing control of display of each of said plurality of frames.

15. A content display method for displaying animation formed of a plurality of frames as a content, comprising:
the complexity calculating step of calculating, for each of said plurality of frames, complexity when displaying the relevant frame; and
the control step of suppressing display of the frame for which said calculated complexity is at least a predetermined value.

16. A computer readable recording medium recorded with the content display program according to any of claims 6-10.
